# EUROPEAN PATENT APPLICATION

(11) **EP 4 184 648 A1**
(43) Date of publication of application: **24.05.2023**
(21) Application number: 21927058.4
(22) Date of filing: 24.09.2021
(51) Int. Cl.: H01M 10/0567

(54) **ELECTROLYTE, SECONDARY BATTERY, BATTERY MODULE, BATTERY PACK, AND POWER-CONSUMING APPARATUS**

(71) Applicant: Contemporary Amperex Technology Co., Limited, Ningde, Fujian 352100 (CN)
(72) Inventor: PENG, Chang, Fujian 352100 (CN); CHEN, Peipei, Fujian 352100 (CN); ZOU, Hailin, Fujian 352100 (CN)
(74) Representative: Gong, Jinping
(86) International application number: PCT/CN2021/120318
(87) International publication number: WO 2023/044753

(57) **Abstract**

The present application provides an electrolyte, the electrolyte including a fluorinated metal salt with S=O or P=O; and a titanate with a structural formula Ti-(O-R₁)₄, where the R1 is selected from one or more of C₁-C₆ alkyl, C₁-C₆ halogenated alkyl, C₂-C₆ alkenyl, C₂-C₆ alkynyl or C₁-C₆ silyl, and a secondary battery including the electrolyte, a battery module, a battery pack and a power consumption apparatus.

## Description

### TECHNICAL FIELD

The present application relates to the field of lithium battery technologies, and in particular, to an electrolyte, a secondary battery including the electrolyte, a battery module, a battery pack and a power consumption apparatus.

### BACKGROUND

In recent years, with the wider application of lithium-ion batteries, the lithium-ion batteries are widely applied to energy storage power systems, such as hydraulic, thermal, wind and solar power stations, as well as many fields such as electrical tools, electric bicycles, electric motorcycles, electric vehicles, military equipment and aerospace. Due to the great development of the lithium-ion batteries, higher requirements are put forward for their energy density, cycle performance, safety performance, and the like.

However, in a high-voltage charging and discharging process, the safety and performance stability of lithium-ion batteries have not been effectively improved.

### SUMMARY

The present application is made in view of the above subject, and a purpose thereof is to provide an electrolyte to solve the problem of a larger cyclic stress caused by a cyclic expansion of a high-voltage system.

In order to achieve the above purpose, the present application provides an electrolyte, a secondary battery including the electrolyte, a battery module, a battery pack and a power consumption apparatus.

A first aspect of the present application provides an electrolyte, the electrolyte including
a fluorinated metal salt with S=O or P=O; and
a titanate with a structural formula Ti-(O-R₁)₄, where the R₁ is selected from one or more of C₁-C₆ alkyl, C₁-C₆ halogenated alkyl, C₂-C₆ alkenyl, C₂-C₆ alkynyl or C₁-C₆ silyl.

A battery applying the electrolyte of the present application has a low cyclic stress and a low electrode sheet expansion under the cyclic expansion of the high-voltage system.

In any embodiment, optionally, the fluorinated metal salt is selected from one or more of MSO₃F and MPO₂F₂; and M is a metal ion, optionally, it may be one of Li, Na, K or Cs.

In any embodiment, optionally, the fluorinated metal salt is selected from one or more of LiSO₃F and LiPO₂F₂.

In any embodiment, optionally, the titanate is selected from one or more of the following: Ti-[O-Si(CH₃)₃]_{₄} , Ti-[O-CH₂CH₂CH₃]_{₄} , Ti-[O-CH₂CH₃]_{₄} , Ti-[O-CH₂CH₂CF₃]_{₄} and Ti-[O-CH₂CH=CH₂]_{⁴}.

In any embodiment, optionally, a molar ratio of the titanate to the fluorinated metal salt is 2/1-1/20, and is optionally 1/8-1/10. When the molar ratio of the titanate to the fluorinated metal salt is within the above range, the battery applying the electrolyte of the present application has a smaller electrode sheet expansion force and a smaller cyclic stress.

In any embodiment, optionally, the fluorinated metal salt accounts for 0.01%~8% of an electrolyte quality, optionally may be 0.1%~5%, and further optionally may be 0.2%~3%; and the titanate accounts for 0.01%~8% of the electrolyte quality, optionally may be 0.1%~5%, and further optionally may be 0.15%~2.5%.

In any embodiment, optionally, a sum of the fluorinated metal salt and the titanate accounts for 0.01~10% of the electrolyte quality, optionally may be 0.1%~8%, and further optionally may be 0.2%~4%.

In any embodiment, optionally, the electrolyte further includes a fluorinated solvent, and the fluorinated solvent is selected from one or more of fluorocarbonate, fluorobenzene and fluoroether; optionally, the fluorocarbonate is selected from at least one of 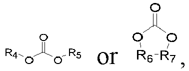 and/or, the fluorobenzene is 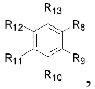 and/or, the fluoroether is 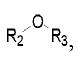 , where R₂, R₃, R₄ and R₅ are each independently selected from C₁-C₆ alkyl and C₁-C₆ fluoroalkyl, R₆ and R₇ are each independently selected from C₁-C₄ alkylene and C₁-C₄ fluoroalkylene, and R₈, R₉, R₁₀, R₁₁, R₁₂ and R₁₃ are each independently selected from F or H. By adding the fluorinated solvent to the electrolyte, an oxidation potential of the electrolyte may be further improved, an electrochemical window of the electrolyte may be widened, an oxidative decomposition of the electrolyte may be inhibited, the damage of SEI and CEI films may be reduced, the electrode sheet expansion in the cycle process may be reduced and the cyclic expansion stress may be reduced.

In any embodiment, optionally, the fluorocarbonate is selected from at least one of 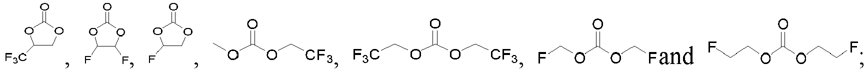 and/or, the fluorobenzene is 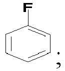 and/or, the fluoroether is selected from at least one of

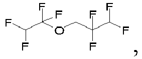

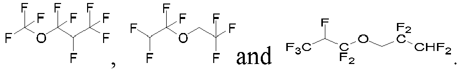

In any embodiment, optionally, the fluorinated solvent accounts for 10-70% of the electrolyte quality.

A second aspect of the present application further provides a secondary battery, including the electrolyte according to the first aspect of the present application.

In any embodiment, optionally, the secondary battery includes a positive electrode sheet and a negative electrode sheet, the positive electrode sheet includes a positive electrode current collector and a positive electrode film layer provided on at least one surface of the positive electrode current collector, and the positive electrode film layer contains a vinylidene fluoride-alkyl unit-acrylate-acrylic acid copolymer (PVdF-Ac) as a binder.

In any embodiment, optionally, the binder has a structure of a general formula (I): 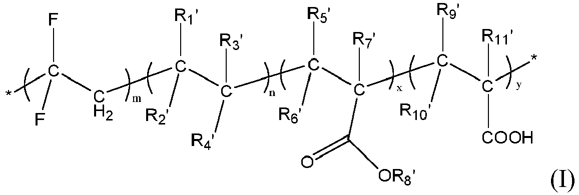
where m=60~75%,
n=5%~10%,
x=10%~25%,
y=3~5%,
R₁', R₂', R₃' and R₄' are each independently selected from hydrogen, optionally substituted C₁-C₈ alkyl, where a substituent is selected from at least one of F, Cl and Br.
R₅', R₆' and R₇'are each independently selected from hydrogen, optionally substituted C₁-C₆ alkyl, where the substituent is selected from at least one of F, Cl and Br.
R₈' is selected from optionally substituted C₁-C₁₅ alkyl, where the substituent is selected from at least one of F, Cl and Br.
R₉', R₁₀' and R₁₁' are each independently selected from hydrogen, optionally substituted C₁-C₆ alkyl, where the substituent is selected from at least one of F, Cl and Br.

In any embodiment, optionally, the positive electrode film layer contains at least one positive electrode active material selected from the following: lithium manganese iron phosphate, lithium cobalt oxide, lithium nickel oxide, lithium manganese oxide, lithium nickel cobalt manganese oxide, lithium nickel cobalt aluminum oxide and a complex of the above compounds with other transition metal or non-transition metal.

In any embodiment, optionally, the negative electrode sheet includes a negative electrode current collector and a negative electrode film layer provided on at least one surface of the negative electrode current collector, and the negative electrode film layer contains a compound with an epoxy group or an isocyanate group; when the negative electrode film layer contains a compound with the epoxy group, the compound with the epoxy group contains at least two epoxy groups, and when the negative electrode film layer contains a compound with the isocyanate group, the compound with the isocyanate group contains at least two isocyanate groups.

In any embodiment, optionally, the compound with the epoxy group is selected from one or more of bisphenol A diglycidyl ether, bisphenol F diglycidyl ether, bisphenol S diglycidyl ether, pentaerythritol glycidyl ether, 1, 4-butanediol glycidyl ether, propylene glycol glycidyl ether, glycidyl phthalate, diglycidyl tetrahydrophthalate, diglycidyl hexahydrophthalate, 4, 4'-diaminodiphenylmethane tetraglycidyl epoxy, triglycidyl-p-aminophenol, 1, 3-bis (N, N-diglycidylaminomethyl) cyclohexane, tetraglycidyl-1, 3-bis (aminomethylcyclohexane), 9, 9-bis [(2, 3-glycidoxy) phenyl] fluorene, 1, 4-cyclohexanedimethanol diglycidyl ether, tetraglycidyl-4, 4'-diaminodiphenyl ether and tetraglycidyl-3, 4'-diaminodiphenyl ether;
and the compound with the isocyanate group is selected from one or more of toluene diisocyanate, diphenylmethane diisocyanate, 1, 5-naphthalene diisocyanate, dimethyl biphenyl diisocyanate, hexamethylene diisocyanate, 2, 2, 4-trimethylhexamethylene diisocyanate, 2, 4, 4-trimethylhexamethylene diisocyanate, xylylene diisocyanate, tetramethyl xylylene diisocyanate, hydrogenated xylylene diisocyanate, isophor of erone diisocyanate, 4, 4'-dicyclohexylmethane diisocyanate, 1, 4-cyclohexane diisocyanate, methylcyclohexane diisocyanate, 1, 4-phenylene diisocyanate and norbornane diisocyanate.

A third aspect of the present application provides a battery module, including the secondary battery according to the second aspect of the present application.

A fourth aspect of the present application provides a battery pack, including the secondary battery according to the second aspect of the present application and the battery module according to the third aspect of the present application.

A fifth aspect of the present application provides a power consumption apparatus, including at least one of the secondary battery according to the second aspect of the present application, the battery module according to the third aspect of the present application or the battery pack according to the fourth aspect of the present application.

The battery module, the battery pack, or the power consumption apparatus in the present application include the secondary battery according to the second aspect of the present application, and therefore have at least the same advantages as the secondary battery according to the second aspect of the present application.

### BRIEF DESCRIPTION OF DRAWINGS

FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application shown in FIG. 4.
FIG. 6 is a schematic diagram of a power consumption apparatus using a secondary battery according to an embodiment of the present application as a power supply.

### DESCRIPTION OF REFERENCE SIGNS

1 battery pack; 2 upper box; 3 lower box; 4 battery module; 5 secondary battery; 51 housing; 52 electrode assembly; 53 top cover assembly.

### DESCRIPTION OF EMBODIMENTS

Embodiments that specifically disclose an electrolyte, a secondary battery, a battery module, a battery pack and an electrical apparatus of the present application will be described below in detail with reference to the accompanying drawings as appropriate. However, unnecessary detailed descriptions may be omitted in some cases. For example, detailed description for a well-known matter or repeated description for a practically identical structure may be omitted. This is to avoid the following description to become unnecessarily redundant and to facilitate understanding by those skilled in the art. In addition, the drawings and the following description are provided for those skilled in the art to fully understand the present application, and are not intended to limit the subject matter described in the claims.

The "ranges" disclosed in the present application is defined in the form of lower limits and upper limits, a given range is defined by selection of a lower limit and an upper limit, and the selected lower and upper limits define the boundaries of a specific range. The ranges defined in this way may include or exclude end values, and may be arbitrarily combined, that is, any lower limit man be combined with any upper limit to form a range. For example, if the ranges of 60-120 and 80-110 are listed for a specific parameter, it is understood as ranges of 60-110 and 80-120, which is expectable. In addition, if the minimum range values 1 and 2 are listed, and if the maximum range values 3, 4 and 5 are listed, the following ranges are all expected: 1-3, 1-4, 1-5, 2-3, 2-4 and 2-5. In the present application, unless otherwise illustrated, the numerical range "a-b" represents an abbreviated representation of a combination of any real numbers between a and b, where both a and b are real numbers. For example, the numerical range "0-5" indicates that all real numbers between "0-5" are all listed herein, and "0-5"is only an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of the present application may be combined with each other to form new technical solutions.

Unless otherwise specified, all the technical features and optional technical features of the present application may be combined with each other to form new technical solutions.

Unless otherwise specified, all the steps of the present application may be performed sequentially or randomly, preferably sequentially. For example, the method includes steps (a) and (b), which indicates that the method may include sequentially performing the steps (a) and (b), or sequentially performing the steps (b) and (a). For example, the mentioned method may further include step (c), which indicates that the step (c) may be added to the method in any order. For example, the method may include the steps (a), (b) and (c), or the steps (a), (c) and (b), or the steps (c), (a) and (b), or the like.

Unless otherwise specified, "including" and "containing" mentioned in the present application indicate open-ended or closed-ended. For example, the "including" and "containing" may indicate that other components not listed may further be included or contained, or only the listed components may be included or contained.

The terms "above" and "below" used in the present application include the numbers, for example, "one or more" means one or more, and "one or more of A and B" means "A", "B" or "A and B".

Unless otherwise specified, the term "or" is inclusive in the present application. For example, the phrase "A or B" indicates "A, B, or both A and B". More specifically, the condition "A or B" is satisfied by either of the following: A is true (or present) and B is false (or absent); A is false (or absent) and B is true (or present); or both A and B are true (or present).

Unless otherwise stated, a content and percentage in the context of the present invention are based on a mass meter.

For the purpose of the present invention, unless otherwise stated, a substituent has the following meanings:

The terms "halogen", "halogen atom" or "halogenation" should be understood to mean fluorine, chlorine, bromine and iodine, in particular bromine, chlorine or fluorine, preferably chlorine or fluorine, more preferably fluorine.

The term "alkyl" should be understood to mean a straight chain or a branched hydrocarbon radical having a specified number of carbon atoms (eg, C₁-C₈ , one, two, three, four, five, six, seven or eight carbon atoms), such as a methyl, an ethyl, a n-propyl, an isopropyl, a n-butyl, an isobutyl, a sec-butyl, a tert-butyl, a pentyl, an isopentyl, a hexyl, a heptyl, an octyl, a 2-methylbutyl, an 1-methylbutyl, an 1-ethylpropyl, an 1, 2-dimethylpropyl, a neopentyl, an 1, 1-dimethylpropyl, a 4-methylpentyl, a 3-methylpentyl, a 2-methylpentyl, an 1-methylpentyl, a 2-ethylbutyl, an 1-ethylbutyl, a 3, 3-dimethylbutyl, a 2, 2-dimethylbutyl, an 1, 1-dimethylbutyl, a 2, 3-dimethylbutyl, an 1, 3-dimethylbutyl or an 1, 2-dimethylbutyl. The term "C₁-C₆-alkyl" should be understood to mean a straight chain or a branched hydrocarbon radical having 1, 2, 3, 4, 5 or 6 carbon atoms, such as the methyl, the ethyl, the n-propyl, the isopropyl, the n-butyl, the tert-butyl, the pentyl, the isopentyl, the hexyl, the 2-methylbutyl, the 1-methylbutyl, the 1-ethylpropyl, the 1, 2-dimethylpropyl, the neopentyl, the 1, 1-dimethylpropyl, the 4-methylpentyl, the 3-methylpentyl, the 2-methylpentyl, the 1-methylpentyl, the 2-ethylbutyl, the 1-ethylbutyl, the 3, 3-dimethylbutyl, the 2, 2-dimethylbutyl, the 1, 1-dimethylbutyl, the 2, 3-dimethylbutyl, the 1, 3-dimethylbutyl or the 1, 2-dimethylbutyl. Preferably, the alkyl has 1, 2, 3 or 4 carbon atoms ("C₁-C₄-alkyl"), such as the methyl, the ethyl, the n-propyl or the isopropyl.

The term "C₂-C₆-alkenyl" should be understood to mean a straight chain or a branched monovalent hydrocarbon radical containing one double bond and having 2, 3, 4, 5 or 6 carbon atoms. In particular, the alkenyl is a C₂-C₃-alkenyl, a C₃-C₆-alkenyl or a C₃-C₄-alkenyl. The alkenyl is, for example, a vinyl, an allyl, an (E)-2-methylvinyl, a (Z)-2-methylvinyl or an isopropenyl.

The term "C₂-C₆- alkynyl" should be understood to mean a straight chain or a branched monovalent hydrocarbon radical containing one triple bond and containing 2, 3, 4, 5 or 6 carbon atoms. In particular, the alkynyl is a C₂-C₃-alkynyl, a C₃-C₆-alkynyl or a C₃-C₄-alkynyl. The C2-C3-alkynyl is, for example, an ethynyl, a prop-1-ynyl or a prop-2-ynyl.

The term "C₁-C₄-alkylene" should be understood to mean a straight chain, bivalent and saturated hydrocarbon radical having 1 to 4 carbon atoms, in particular 2, 3 or 4 carbon atoms (for example, in "C₂-C₄-alkylene"), such as an ethylene, a n-propylene, a n-butylene, a n-pentylene or a n-hexylene, preferably a n-propylene or a n-butylene.

The term "C₁-C₆-silyl" should be understood to mean a straight chain or a branched Si-alkyl having 1, 2, 3, 4, 5 or 6 carbon atoms, such as (but not limited to) a trimethylsilyl and a triethylsilyl.

"Halogenated alkyl", "halogenated alkenyl", "halogenated alkynyl" and "halogenated alkylene" respectively represents the alkyl, the alkenyl, the alkynyl and the alkylene partially or completely substituted by the same or different halogen atoms, such as a monohalogenated alkyl, such as CH₂CH₂Cl, CH₂CH₂Br, CHClCH₃, CH₂Cl and CH₂F; a fully halogenated alkyl, such as CCl₃, CClF₂, CFCl2, CF₂CClF₂ and CF₂CClFCF₃; halogenated alkyl, such as CH₂CHFC₁, CF₂CClFH, CF₂CBrFH and CH₂CF₃; and the term fully halogenated alkyl also includes the term perfluoroalkyl.

In the present invention, "C₁-C₈" should be interpreted to include any sub-range therein, such as C₁-C₈, C₁-C₇, C₁-C₆, C₁-C₅, C₁-C₄, C₁-C₃, C₁-C₂, C₂-C₈, C₂-C₇, C₂-C₆, C₂-C₅, C₂-C₄, C₂-C₃, C₃-C₈, C₃-C₇, C₃-C₆, C₃-C₅, C₃-C₄, C₄-C₈, C₄-C₇, C₄-C₆, C₄-C₅, C₅-C₈, C₅-C₇, C₅-C₆, C₆-C₈, C₆-C₇ and C₇-C₈.

Similarly, the term "C₁-C₆" should be interpreted to include any sub-range therein, such as C₁-C₆, C₁-C₅, C₁-C₄, C₁-C₃, C₁-C₂, C₂-C₆, C₂-C₅, C₂-C₄, C₂-C₃, C₃-C₆, C₃-C₅, C₃-C₄, C₄-C₆, C₄-C₅ and C₅-C₆.

Similarly, the term "C₁-C₄" should be interpreted to include any sub-range therein, such as C₁-C₄, C₁-C₃, C₁-C₂, C₂-C₄, C₂-C₃ and C₃-C₄.

Similarly, the term "C₂-C₆" should be interpreted to include any sub-range therein, such as C₂-C₅, C₂-C₄, C₂-C₃, C₃-C₄, C₃-C₅, C₃-C₆, C₄-C₅, C₄-C₆ and C₅-C₆.

In order to improve the energy density of the battery, improving a working potential of a positive material becomes a primary strategy of researchers. For example, a working voltage of a conventional ternary positive electrode material is increased to above 4.4V, and the positive electrode material with a higher voltage and gram capacity, such as a lithium-rich layered positive electrode, a spinel oxide LiNi_{0.5}Mn_{1.5}O₄, and the like, has a higher working voltage, and an upper limit of the voltage is close to 5 V The inventor of the present application found that after increasing the voltage, an electrolyte is not resistant to oxidation, causing a decrease in the performance of the entire battery. In addition, after increasing the working voltage of the positive electrode material, an amount of delithiation of the positive electrode material is larger, and the corresponding volume of the positive electrode material and the negative electrode material change greatly, so as to cause a larger change in the total volume of the battery core during the charging and discharging process of the battery core, and a free electrolyte inside the battery core is squeezed out. If the electrolyte may not flow back to the inside of the battery core in time, it may lead to a lithium evolution due to insufficient dynamics during the cycle process of the battery core. In addition, the larger cycle expansion of the battery core may also cause wrinkles in the electrode sheet of the battery core, and if it is more serious, it may further lead to short circuit of the battery core, causing safety problems, which may greatly affect the reliability of the battery core.

After a lot of experiments, the inventor of the present application found that when the high-voltage system electrolyte contains the following additives, the cyclic expansion of the battery core may be significantly suppressed, and the cyclic expansion stress may be significantly reduced:
a fluorinated metal salt with S=O or P=O; and
a titanate with a structural formula Ti-(O-R₁)₄, where the R₁ is selected from one or more of C₁-C₆ alkyl, C₁-C₆ halogenated alkyl, C₂-C₆ alkenyl, C₂-C₆ alkynyl or C₁-C₆ silyl.

### [Electrolyte]

A first aspect of the present application provides an electrolyte, the electrolyte including
a fluorinated metal salt with S=O or P=O; and
a titanate with a structural formula Ti-(O-R₁)₄, where the R₁ is selected from one or more of C₁-C₆ alkyl, C₁-C₆ halogenated alkyl, C₂-C₆ alkenyl, C₂-C₆ alkynyl or C₁-C₆ silyl.

The inventor unexpectedly found that by adding the above additives in the electrolyte, the battery applying the electrolyte of the present application has a low cyclic stress. During the charging and discharging process of the battery core, the electrolyte of the present application may form a polymer with multi-dimensional network and toughness and an inorganic composite SEI film on the positive and negative electrodes, which may significantly reduce the cyclic stress.

In some embodiments, optionally, the fluorinated metal salt is selected from one or more of MSO₃F and MPO₂F₂; and M is a metal ion, optionally, it may be one of Li, Na, K or Cs.

In some embodiments, optionally, the fluorinated metal salt is selected from one or more of LiSO₃F and LiPO₂F₂.

In some embodiments, optionally, the titanate is selected from one or more of the following: Ti-[O-Si(CH₃)₃]_{₄} , Ti-[O-CH₂CH₂CH₃]_{₄} , Ti-[O-CH₂CH₃]_{₄} , Ti-[O-CH₂CH₂CF₃]_{₄} and Ti-[O-CH₂CH=CH₂]_{₄}.

In some embodiments, optionally, a molar ratio of the titanate to the fluorinated metal salt is 2/1-1/20, and is optionally 1/8-1/10. When the molar ratio of the titanate to the fluorinated metal salt is within the above range, the battery applying the electrolyte of the present application has a smaller electrode sheet expansion and a smaller cyclic stress. By adjusting the molar ratio of the titanate to the fluorinated metal salt, the corresponding SEI film has a better binding force and toughness to the positive and negative active substances. When the molar ratio is too high, the flexibility of the SEI film becomes poor, and the effect of inhibiting cyclic expansion is poor. When the molar ratio is too low, the SEI film is easily brittle, which in turn causes the electrode sheet expansion, and the cyclic stress of the battery core is relatively larger.

In some embodiments, optionally, the fluorinated metal salt accounts for 0.01%~8% of an electrolyte quality, optionally may be 0.1%~5%, and further optionally may be 0.2%~3%; and the titanate accounts for 0.01%~8% of the electrolyte quality, optionally may be 0.1%~5%, and further optionally may be 0.15%~2.5%.

In some embodiments, optionally, a sum of the fluorinated metal salt and the titanate accounts for 0.01~10% of the electrolyte quality, optionally may be 0.1%~8%, and further optionally may be 0.2%~4%.

In some embodiments, optionally, the electrolyte further includes a fluorinated solvent, and the fluorinated solvent is selected from one or more of fluorocarbonate, fluorobenzene and fluoroether; optionally, the fluorocarbonate is selected from at least one of 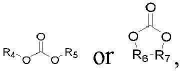 and/or, the fluorobenzene is 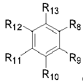 and/or, the fluoroether is 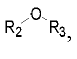 , where R₂, R₃, R₄ and R₅ are each independently selected from C₁-C₆ alkyl and C₁-C₆ fluoroalkyl, R₆ and R₇ are each independently selected from C₁-C₄ alkylene and C₁-C₄ fluoroalkylene, and R₈, R₉, R₁₀, R₁₁, R₁₂ and R₁₃ are each independently selected from F or H. The inventor of the present application found that after increasing the working voltage of the positive electrode material, the conventional electrolyte solvent is not resistant to oxidation. By adding the fluorinated solvent to the electrolyte, an oxidation potential of the electrolyte may be further improved, an electrochemical window of the electrolyte may be widened, an oxidative decomposition of the electrolyte may be inhibited, the damage of SEI and CEI films may be reduced, the electrode sheet expansion in the cycle process may be reduced and the cyclic expansion stress may be reduced.

In some embodiments, optionally, the fluorocarbonate is selected from at least one of 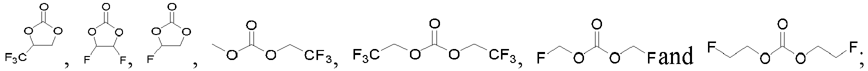 and/or, the fluorobenzene is 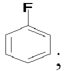 and/or, the fluoroether is selected from at least one of

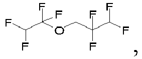

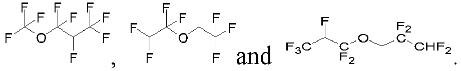

In some embodiments, optionally, the fluorinated solvent accounts for 10-70% of the electrolyte quality. When the content is too high, the conductivity of the electrolyte may be greatly affected, thereby affecting the power performance of the battery core; and when the content is too low, the effect of suppressing cyclic expansion is poor.

In some embodiments, the electrolyte contains at least one lithium salt selected from the following: a lithium hexafluorophosphate, a lithium tetrafluoroborate, lithium perchlorate, a lithium hexafluoroarsenate, a lithium bisfluorosulfonimide, a bistrifluoromethanesulfonate lithium imide, a lithium trifluoromethanesulfonate, a lithium difluorophosphate, a lithium difluorooxalate borate, a lithium dioxalate borate, a lithium difluorobisoxalate phosphate and a lithium tetrafluorooxalate phosphate. Optionally, the lithium salt accounts for 10-14% of the electrolyte quality.

In some embodiments, the electrolyte contains at least one organic solvent selected from the following: an ethylene carbonate, a propylene carbonate, an ethyl methyl carbonate, a diethyl carbonate, a dimethyl carbonate, a dipropyl carbonate, a carbonic acid methyl propyl, an ethyl propyl carbonate, a butylene carbonate, a fluoroethylene carbonate, a methyl formate, a methyl acetate, an ethyl acetate, a propyl acetate, a methyl propionate, an ethyl propionate, a propionate, a methyl butyrate, an ethyl butyrate, an 1, 4-butyrolactone, a sulfolane, a dimethyl sulfone, a methyl ethyl sulfone and a diethyl sulfone.

In some embodiments, the electrolyte may further optionally include an additive. For example, the additive may include a negative electrode film forming additive, a positive electrode film forming additive, and may further include an additive that may improve some performance of the battery, such as an additive that improves overcharge performance of the battery, an additive that improves high or low temperature performance of the battery, and the like.

### [Positive electrode sheet]

A positive electrode sheet includes a positive electrode current collector and a positive electrode film layer provided on at least one surface of the positive electrode current collector, and the positive electrode film layer contains a vinylidene fluoride-alkyl unit-acrylate-acrylic acid copolymer (PVdF-Ac) as a binder. The binder may further restrain a cyclic expansion of the positive electrode sheet and reduce a cyclic stress. This is because a small amount of COOH and ester bonds contained in the binder may have a stronger van der Waals force and a hydrogen-bond interaction with the corresponding CEI film component, so that a force between a surface of the positive electrode material and the binder is strong, and may further inhibit a positive electrode sheet expansion and reduce the cyclic stress of the battery core. In addition, because a binder molecular chain has a low regularity, a low crystallinity, and contains a copolymerized alkyl chain unit, it has a soft material, a good flexibility and a high tensile strength, so it may further inhibit the cyclic expansion.

In some embodiments, optionally, the binder has a structure of a general formula (I): 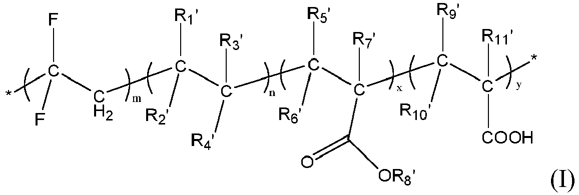
where m=60~75%,
n=5%~10%,
x=10%~25%,
y=3~5%,
R₁', R₂', R₃' and R₄' are each independently selected from hydrogen, optionally substituted Ci-Cs alkyl, where a substituent is selected from at least one of F, Cl and Br,
R₅', R₆' and R₇'are each independently selected from hydrogen, optionally substituted C₁-C₆ alkyl, where the substituent is selected from at least one of F, Cl and Br,
R₈' is selected from optionally substituted C₁-C₁₅ alkyl, where the substituent is selected from at least one of F, Cl and Br, and
R₉', R₁₀' and R₁₁' are each independently selected from hydrogen, optionally substituted C₁-C₆ alkyl, where the substituent is selected from at least one of F, Cl and Br.

In the above general formula (I), m, n, x and y represent a proportion of each monomer in the polymer; and optionally, m+n+x+y=100%.

In some embodiments, the positive electrode current collector may use a metal foil or a composite current collector. For example, as the metal foil, an aluminum foil may be used. The composite current collector may include a base layer of a polymer material and a metal layer formed on at least one surface of the base layer of the polymer material. The composite current collector may be formed by forming a metal material (aluminum, aluminum alloys, nickel, nickel alloys, titanium, titanium alloys, silver and silver alloys, and the like.) on the base layer of the polymer material (such as polypropylene (PP), polyethylene terephthalic acid ethylene glycol ester (PET), polybutylene terephthalate (PBT), polystyrene (PS), polyethylene (PE) and other substrates).

In some embodiments, a positive electrode active material may use a positive electrode active material for the battery known in the art. As an example, the positive electrode active material may include at least one of the following materials: an olivine-structured lithium phosphate, a lithium transition metal oxide and their respective modified compounds. However, the present application is not limited to these materials, and other conventional materials that may be used as the positive electrode active material for the battery may also be used. These positive electrode active materials may be used alone, or two or more types may be used in combination. Where an example of the lithium transition metal oxide may include but is not limited to at least one of lithium cobalt oxide (such as LiCoO₂), lithium nickel oxide (such as LiNiO₂), lithium manganese oxide (such as LiMnO₂ and LiMn₂O₄), lithium Nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (may also be abbreviated as NCM₅₂₃), LiNi_{0.5}Co_{0.25}Mn_{0.25}O₂ (may also be abbreviated as NCM₂₁₁), LiNi_{0.6}Co_{0.2}Mn_{0.2}O₂ (may also be abbreviated as NCM₆₂₂), LiNi_{0.8}Co_{0.1}Mn_{0.1}O₂ (also abbreviated as NCM₈₁₁), a lithium nickel cobalt aluminum oxide (such as LiNi_{0.85}Co_{0.15}Al_{0.05}O₂) and modified compounds thereof. An example of the olivine-structured lithium phosphate may include, but is not limited to at least one of composite of lithium iron phosphate and carbon, lithium manganese phosphate (for example, LiMnPO₄), composite of lithium manganese phosphate and carbon, lithium manganese iron phosphate, and composite of lithium manganese iron phosphate and carbon.

In some embodiments, the positive electrode film layer may further optionally include a conductive agent. As an example, the conductive agent may include at least one of superconducting carbon, acetylene black, carbon black, Ketjen black, carbon dot, carbon nanotube, grapheme and carbon nanofiber.

In some embodiments, the positive electrode sheet may be prepared by the flowing methods: the above components used to prepare the positive electrode sheet, such as the positive active material, the conductive agent and the binder and any other components are dispersed in a solvent (such as a N-methylpyrrolidone) to form a positive electrode slurry; and the positive electrode slurry is coated on the positive electrode current collector, and after drying, cold pressing and other processes, the positive electrode sheet may be obtained.

### [Negative electrode sheet]

A negative electrode sheet includes a negative electrode current collector and a negative electrode film layer provided on at least one surface of the negative electrode current collector. The negative electrode film layer contains a compound with an epoxy group or an isocyanate group; when the negative electrode film layer contains a compound with the epoxy group, the compound with the epoxy group contains at least two epoxy groups; and when the negative electrode film layer contains a compound with the isocyanate group, the compound with the isocyanate group contains at least two isocyanate groups. These negative electrode additives may chemically react with a stabilizer in a negative electrode slurry, and groups such as COOH and OH on a surface of a binder, so that the stabilizer and the binder in the negative electrode slurry are connected by the compound containing the epoxy group or the isocyanate group, so that the surface of the negative active material is more completely coated by the binder, which further restricts the volume expansion of the negative active material after lithium insertion, and reduces a cyclic expansion stress of a battery core.

In some embodiments, optionally, the compound with the epoxy group is selected from one or more of bisphenol A diglycidyl ether, bisphenol F diglycidyl ether, bisphenol S diglycidyl ether, pentaerythritol glycidyl ether, 1, 4-butanediol glycidyl ether, propylene glycol glycidyl ether, glycidyl phthalate, diglycidyl tetrahydrophthalate, diglycidyl hexahydrophthalate, 4, 4'-diaminodiphenylmethane tetraglycidyl epoxy, triglycidyl-p-aminophenol, 1, 3-bis (N, N-diglycidylaminomethyl) cyclohexane, tetraglycidyl-1, 3-bis (aminomethylcyclohexane), 9, 9-bis [(2, 3-glycidoxy) phenyl] fluorene, 1, 4-cyclohexanedimethanol diglycidyl ether, tetraglycidyl-4, 4'-diaminodiphenyl ether and tetraglycidyl-3, 4'-diaminodiphenyl ether;
and the compound with the isocyanate group is selected from one or more of toluene diisocyanate, diphenylmethane diisocyanate, 1, 5-naphthalene diisocyanate, dimethyl biphenyl diisocyanate, hexamethylene diisocyanate, 2, 2, 4-trimethylhexamethylene diisocyanate, 2, 4, 4-trimethylhexamethylene diisocyanate, xylylene diisocyanate, tetramethyl xylylene diisocyanate, hydrogenated xylylene diisocyanate, isophor of erone diisocyanate, 4, 4'-dicyclohexylmethane diisocyanate, 1, 4-cyclohexane diisocyanate, methylcyclohexane diisocyanate, 1, 4-phenylene diisocyanate and norbornane diisocyanate.

In some embodiments, the negative electrode current collector may use a metal foil or a composite current collector. For example, as the metal foil, an aluminum foil may be used. The composite current collector may include a base layer of a polymer material and a metal layer formed on at least one surface of the base layer of the polymer material. The composite current collector may be formed by forming a metal material (aluminum, aluminum alloys, nickel, nickel alloys, titanium, titanium alloys, silver and silver alloys, and the like.) on the base layer of the polymer material (such as polypropylene (PP), polyethylene terephthalic acid ethylene glycol ester (PET), polybutylene terephthalate (PBT), polystyrene (PS), polyethylene (PE) and other substrates).

In some embodiments, a positive electrode active material may use a positive electrode active material for the battery known in the art. As an example, the positive electrode active material may include at least one of the following materials: an artificial graphite, a natural graphite, a soft carbon, a hard carbon, a silicon-based material, a tin-based material, a lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin oxide compound and tin alloy. However, the present application is not limited to these materials, and other conventional materials that may be used as the negative electrode active material for the battery may also be used. These negative electrode active materials may be used alone, or two or more types may be used in combination.

In some embodiments, the negative electrode film layer may further optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may further optionally include a conductive agent. The conductive agent may selected from at least one of superconducting carbon, acetylene black, carbon black, Ketjen black, carbon dot, carbon nanotube, grapheme and carbon nanofibe

In some embodiments, the negative electrode film layer may further optionally include other additives, such as a thickener (such as a sodium carboxymethyl cellulose (CMC Na)), and the like.

In some embodiments, the negative electrode sheet may be prepared by the flowing methods: the above components used to prepare the negative electrode sheet, such as the negative active material, the conductive agent and the binder and any other components are dispersed in a solvent (such as deionized water) to form a negative electrode slurry; and the negative electrode slurry is coated on the negative electrode current collector, and after drying, cold pressing and other processes, the negative electrode sheet may be obtained.

### [Separator]

There is no particular limitation on the type of a separator in the present application, and any well-known porous-structure separator with good chemical stability and mechanical stability may be selected.

In some embodiments, the material of the separator may be selected from at least one of glass fiber, non-woven fabric, polyethylene, polypropylene and polyvinylidene fluoride. The separator may be a single-layer thin film, or may be a multi-layer composite thin film, and is not particularly limited. When the separator is the multi-layer composite thin film, the materials of each layer may be the same or different, and are not particularly limited.

In some embodiments, the positive electrode sheet, the negative electrode sheet and the separator may be made into an electrode assembly through a winding process or a lamination process.

### [Secondary battery]

A second aspect of the present application provides a secondary battery, including the electrolyte according to the first aspect of the present application.

In general, the secondary battery includes a positive electrode sheet, a negative electrode sheet, an electrolyte and a separator. During the charging and discharging process of the battery, an active ion is inserted and extracted back and forth between the positive electrode sheet and the negative electrode sheet. The electrolyte plays a role of conducting the ion between the positive electrode sheet and the negative electrode sheet. The separator is provided between the positive electrode sheet and the negative electrode sheet, and mainly plays a role of preventing the short circuit of the positive and negative electrodes, and at the same time, it may allow the ion to pass through.

In some embodiments, optionally, a maximum using voltage of the secondary battery satisfies 4.25≤V≤4.95. For a spinel LNMO system, a charge cut-off voltage is up to 4.95V

In some embodiments, the secondary battery may include an outer packing. The outer packing may be used to package the above electrode assembly and the electrolyte.

In some embodiments, the outer packing of the secondary battery may be a hard housing, such as a hard plastic housing, an aluminum housing, a steel housing, and the like. The outer package of the secondary battery may be a soft package, for example, a soft bag package. A material of the soft package may be plastic, and as the plastic, a polypropylene, a polybutylene terephthalate and a polybutylene succinate may be listed.

In addition, the secondary battery, the battery module, the battery pack and the power consumption apparatus of the present application may be described below with reference to the accompanying drawings as appropriate.

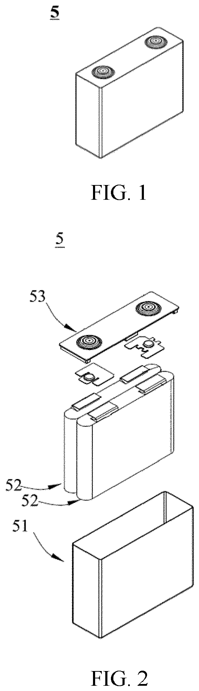

The present application has no particular limitation on the shape of the secondary battery, and it may be of a cylindrical, square, or any other shape. For example, FIG. 1 is a secondary battery 5 in a square structure as an example.

In some embodiments, with reference to FIG. 2, the outer package may include a housing 51 and a cover plate 53. Where the housing 51 may include a bottom plate and a side plate connected to the bottom plate, and the bottom plate and the side plates are enclosed to form an accommodating chamber. The housing 51 has an opening that is in communication with the accommodating chamber, and the cover plate 53 may cover the opening to close the accommodating chamber. The positive electrode sheet, the negative electrode sheet and the separator may form an electrode assembly 52 through a winding process or a lamination process. The electrode assembly 52 is packaged in the accommodating chamber. The electrolyte is infiltrated in the electrode assembly 52. The number of electrode assemblies 52 included in the secondary battery 5 may be one or more, and those skilled in the art may select them according to specific actual needs.

In some embodiments, the secondary battery may be assembled into a battery module, the number of the secondary battery included in the battery module may be one or more, and the specific number may be selected by those skilled in the art based on application and capacity of the battery module.

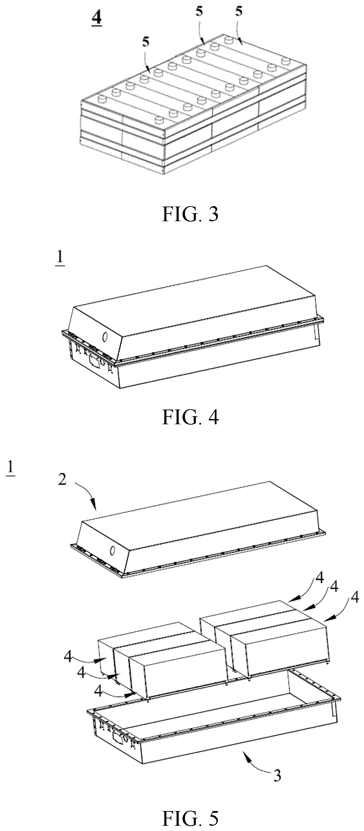

FIG. 3 is a battery module 4 as an example. With reference to FIG. 3, in the battery module 4, a plurality of secondary batteries 5 may be sequentially provided along a length direction of the battery module 4. Certainly, it may be arranged in accordance with any other manner. Further, the plurality of secondary batteries 5 may be fixed with a fastener.

Optionally, the battery module 4 may further include a shell with an accommodating space, and the plurality of secondary batteries 5 are accommodated in the accommodating space.

In some embodiments, the above battery module may be further assembled into a battery pack, and a quantity of battery modules included in the battery pack may be one or more, and the specific number may be selected by those skilled in the art based on application and capacity of the battery pack.

FIG. 4 and FIG. 5 are a battery pack 1 as an example. With reference to FIG. 4 and FIG. 5, the battery pack 1 may include a battery box and a plurality of battery modules 4 provided in the battery box. The battery box includes an upper box body 2 and a lower box body 3, the upper box body 2 may cover the lower box body 3, and form an enclosed space for accommodating the battery module 4. The plurality of battery modules 4 may be arranged in the battery box in any manner.

In addition, the present application further provides a power consumption apparatus, and the power consumption apparatus includes at least one of the secondary battery, the battery module, or the battery pack provided in the present application. The secondary battery, the battery module, or the battery pack may be used as a power source of the power consumption apparatus, or as an energy storage unit of the power consumption apparatus. The power consumption apparatus may include a mobile device (for example, a mobile phone or a notebook computer, and the like), an electric vehicle (for example, a full electric vehicle, a hybrid electric vehicle, a plug-in hybrid electric vehicle, an electric bicycle, an electric scooter, an electric golf vehicle, or an electric truck), an electric train, a ship and a satellite, an energy storage system, and the like, but is not limited hereto.

As the power consumption apparatus, the secondary battery, the battery module, or the battery pack may be selected according to its usage requirements.

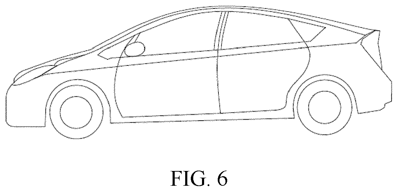

FIG. 6 is a power consumption apparatus as an example. The power consumption apparatus is a full electric vehicle, a hybrid electric vehicle, a plug-in hybrid electric vehicle, and the like. To meet a requirement of the power consumption apparatus for a high power and a high energy density of the secondary battery, the battery pack or the battery module may be used.

The apparatus as another example may be a mobile phone, a tablet computer, a notebook computer, and the like. The apparatus usually requires lightness and thinness, and the secondary battery may be used as a power source.

### Embodiments

The embodiments of the present application will be illustrated hereinafter. The embodiments described below are exemplary, and merely used to explain the present application, and may not be understood as limitation to the present application. Embodiments with no specific techniques or conditions are conducted according to techniques or conditions described in the literature in the art or according to the product specification. The reagents or instruments used without the manufacturer's indication are conventional products that may be obtained from the market.

### Embodiment 1

### [Preparation of a positive electrode sheet]

A positive active material LiNi_{0.6}Co_{0.2}Mn_{0.2}O₂ (NCM₆₂₂), a conductive agent acetylene black and a binder polyvinylidene fluoride (PVDF) are dissolved in a solvent N-methyl pyrrolidone (NMP) at a quality ratio of 96.5: 1.5:2, and are stirred fully and mixed evenly to obtain a positive electrode slurry; and after that, the positive electrode slurry is evenly coated on a positive electrode current collector, and then the positive electrode sheet is obtained by drying, cold pressing and slitting.

### [Preparation of a negative electrode sheet]

An active matter artificial graphite, a conductive agent acetylene black, a binder of styrene-butadiene rubber (SBR) and a thickener of carboxymethylcellulose sodium (CMC-Na) are dissolved in a solvent of deionized water at a quality ratio of 95:2:2:1, and are mixed evenly with a solvent of deionized water to prepare the negative electrode slurry; and then the negative electrode slurry is evenly coated on a negative electrode current collector copper foil, and a negative membrane is obtained after drying, and then the negative electrode sheet is obtained by drying, cold pressing and slitting.

### [Preparation of an electrolyte]

In an argon atmosphere glove box (H₂O<0.1ppm and O₂<0.1ppm), refer to Table 1, an organic solvent is mixed evenly according to a quality ratio, and the salt(s) and additive(s) shown in the table are added and stirred evenly to obtained the corresponding electrolyte.

### [Preparation of a secondary battery]

A polypropylene film with a thickness of 12µm is used as an isolation film, a positive electrode sheet, a separator, and a negative electrode sheet are sacked in order, so that the separator is placed between the positive and negative electrode sheets to play a role of isolation; and an electrode assembly is placed in a battery housing, an electrolytic solution is injected after drying, and a secondary battery is produced after processes of forming, standing, and the like.

Conditional parameters of other embodiments and comparative examples are shown in Table 1, the [preparation of a positive electrode sheet], [preparation of a negative electrode sheet], [preparation of an electrolyte] and [preparation of a battery] of these embodiments and comparative examples are the same as the process of Embodiment 1.

### [Related parameter test]

### 1. 45°C cycle of a lithium-ion battery

A battery core is placed in three steel plate fixtures, and then is connected to an upper pressure sensor to detect an expansion force of the battery core during the cycle. Under 45°C, a lithium-ion battery is charged with a constant current of 1C to 4.4V, then charged with a constant current of 4.4V to less than 0.05C, and then the lithium-ion battery is discharged with a constant current of 1C to 2.8V, which is a charging and discharging process. The charging and discharging are repeated in this way for 500cls, and a maximum expansion force of the battery core during the charging process is recorded at 500cls.

### 2. Electrode sheet thickness test

Under 25°C, the lithium-ion battery is charged with a constant current of 0.33C to 4.4V after capacity and after being cycled for 500cls at 45°C, respectively, and then is charged with a constant current of 4.4V to a current less than 0.05C, then the battery is disassembled, and a thickness of a corresponding anode sheet is measured with a micrometer, it is measured for 10 times and an average value is taken. The thickness of the anode sheet of the lithium-ion battery after the capacity is H1, and the thickness of the anode sheet of the lithium-ion battery after circulating EOL at 45°C is H2, which corresponds to a growth rate of the thickness of the anode sheet (h2-h1) /h1.

**Table 1: Conditional parameters of embodiments and comparative examples**

| Sequenc e number | Solven t compo sition (qualit y ratio) | Titanate | Cont ent of the titana te/% | Fluori nated metal salt | Cont ent of the fluori nated metal salt/ % | Mola r ratio of the titana te/the fluori nated metal salt | Lithi um salt | Cont ent of the lithiu m salt/ % | Grow th rate of a thick ness of a negat ive electr ode sheet | Cyc lic stre ss (kg f) |
|---|---|---|---|---|---|---|---|---|---|---|
| C1 (Compar ative example) | EC/E MC=3/ 7 | / | / | / | / | | LiPF ₆ | 12.5 | 38% | 832 |
| C2 (Compar ative example) | EC/E MC=3/ 7 | Ti(OSi(CH₃ )₃)₄ | 2.376 | | | | LiPF ₆ | 12.5 | 37% | 798 |
| C3 (Compar ative example) | EC/E MC=3/ 7 | | | LiSO₃ F | 0.624 | | LiPF ₆ | 12.5 | 37.50 % | 811 |
| E1 | EC/E MC=3/ 7 | Ti(OSi(CH₃ )₃)₄ | 2.376 | LiSO₃ F | 0.624 | 1:1 | LiPF ₆ | 12.5 | 20.10 % | 371 |
| E2 | EC/E MC=3/ 7 | Ti(OSi(CH₃ )₃)₄ | 0.828 | LiSO₃ F | 2.172 | 1:10 | LiPF ₆ | 12.5 | 12.40 % | 251 |
| E3 | EC/E MC=3/ 7 | Ti(OSi(CH₃ )₃)₄ | 0.480 | LiSO₃ F | 2.520 | 1:20 | LiPF ₆ | 12.5 | 16.20 % | 348 |
| C4 (Compar ative example) | EC/E MC=3/ 7 | Ti(OSi(CH₃ )₃)₄ | 0.443 | LiSO₃ F | 2.557 | 1:22 | LiPF ₆ | 12.5 | 26.20 % | 567 |
| E4 | EC/E MC=3/ 7 | Ti(OSi(CH₃ )₃)₄ | 2.652 | LiSO₃ F | 0.348 | 2:1 | LiPF ₆ | 12.5 | 22.60 % | 402 |
| C5 (Compar ative example) | EC/E MC=3/ 7 | Ti(OSi(CH₃ )₃)₄ | 2.815 | LiSO₃ F | 0.185 | 4:1 | LiPF ₆ | 12.5 | 31.30 % | 626 |
| E5 | EC/E MC=3/ 7 | Ti(OCH₂C H₂CH₃)₄ | 0.416 | LiPO₂ F₂ | 1.584 | 1:10 | LiPF ₆ | 12.5 | 13.40 % | 260 |
| E6 | EC/E MC=3/ 7 | Ti(OCH₂C H=CH₂)₄ | 0.449 | LiSO₃ F | 1.551 | 1:9 | LiPF ₆ | 12.5 | 14.90 % | 276 |
| E7 | EC/E MC/ fluoro benzen e=3/6/ 1 | Ti(OSi(CH₃ )₃)₄ | 0.416 | LiSO₃ F | 1.584 | 1:10 | LiPF ₆ | 12.5 | 10.30 % | 229 |
| E8 | EC/E MC/ Trifluo roethyl methyl carbon ate=2/ 1/7 | Ti(OSi(CH₃ )₃)₄ | 0.416 | LiSO₃ F | 1.584 | 1:10 | LiPF ₆ | 12.5 | 10.10 % | 224 |

In can be known from comprehensive analysis of embodiments E1-E6 and comparative examples C1-C3 in Table 1 that an electrode sheet expansion and a cyclic stress of the secondary battery corresponding to embodiments E1-E6 are significantly lower than those of comparative examples C1-C3.

By comparing comparative examples C4-C5 and embodiments E1-E5, it may be seen that when the molar ratio of the titanate to the fluorinated metal salt is 2/1-1/20, the electrode sheet expansion and the cyclic stress of the secondary battery are better.

It may be seen from embodiments E7-E8 that when the electrolyte contains a fluorinated solvent, the electrode sheet expansion and the cyclic stress of the secondary battery are further optimized.

### [Influence of a binder of a positive electrode film layer on battery performance]

Embodiment E9 of the present application is prepared according to the same manner as that of embodiment E2, except that a binder PVDF-Ac is added in the preparation process of a positive electrode sheet, where the PVDF-Ac is prepared by emulsion polymerization, and a molar ratio of a vinylidene fluoride, an ethylene, a methyl acrylate monomer and an acrylic acid monomer used in the synthesis is 60:10:25:5.

An aggregation method is:
Deionized water, a dispersant, a pH adjuster and a chain transfer agent are added to a stainless steel reaction kettle, and deoxidized in vacuo, a quantitative acrylate, acrylic monomer and 1/2 of the vinylidene fluoride as required above are added, a trigger agent is added, the temperature and pressure are control, and a polymerization reaction is started, and the remaining 1/2 of the vinylidene fluoride and the ethylene are continuously add, and after the polymerization is completed, a PVdF-Ac product is obtained after the polymer is demulsified, washed and dried, and a molecular weight is 900,000.

**Table 2: Influence of a binder on battery performance**

| Sequence number | Positive electrode binder | Growth rate of a thickness of a negative electrode sheet | Cyclic stress (kgf) |
|---|---|---|---|
| E2 | PVDF | 12.40% | 251 |
| E9 | PVDF-Ac | 12.10% | 242 |

According to Table 2, it may be known that when a positive electrode film layer contains a vinylidene fluoride-alkyl unit-acrylate-acrylic acid copolymer (PVdF-Ac) as a binder, and a secondary battery has a smaller electrode sheet expansion and a smaller cyclic stress.

### [Influence of an additive in a negative electrode film layer on battery performance]

Embodiments E10-E11 of the present application are prepared according to the same manner as that of embodiment E2, except that an 1, 3-bis (N, N-diglycidyl aminomethyl) cyclohexane or a diphenylmethane diisocyanate as a negative electrode additive is added in the preparation process of a negative electrode sheet, and an active matter artificial graphite, a conductive agent acetylene black, a binder of styrene-butadiene rubber (SBR), a thickener sodium carboxymethyl cellulose (CMC) and a negative electrode additive are dissolved in a solvent of deionized water according to a quality ratio of 95:2:2:0.8:0.2, and are evenly mixed with the solvent of deionized water to prepare a negative electrode slurry, as shown in Table 3.

**Table 3: Influence of an additive in a negative electrode film layer on battery performance**

| Sequence number | Negative additive | Graphite: Conductive Agent: SBR: | Growth rate of a thickness of a negative electrode sheet | Cyclic stress (kgf) |
|---|---|---|---|---|
| E2 | / | 95:2:2:1:0 | 12.40% | 251 |
| E10 | 1, 3-bis (N, N-diglycidyl aminomethyl) cyclohexane | 95:2:2:0.8:0.2 | 10.40% | 232 |
| E11 | diphenylmethane diisocyanate | 95:2:2:0.8:0.2 | 10.20% | 227 |

According to Table 3, it may be known that when a negative electrode film layer contains the 1, 3-bis (N, N-diglycidyl aminomethyl) cyclohexane or the diphenylmethane diisocyanate, a secondary battery has a smaller electrode sheet expansion and a smaller cyclic stress.

### [Battery performance at different voltages]

Comparative example C6 of the present application is prepared according to the same manner as that of embodiment C1, except that in a test of a secondary battery of comparative example C6, a charging cut-off voltage is 4.2V Comparative example E12 of the present application is prepared according to the same manner that of embodiment E2, except that in a test of the secondary battery of comparative example E12, the charging cut-off voltage is 4.2V

**Table 4: Battery performance at 4.2V voltage**

| Sequ ence numb er | Solvent compos ition (quality ratio) | Titanate | Cont ent of the titan ate/ % | Fluori nated metal salt | Con tent of the fluo rinat ed met al salt/ % | Mola r ratio of the titan ate/t he fluor inate d meta 1 salt | Lithi um salt | Co nte nt of the lith ium salt /% | Growt h rate of a thickn ess of a negati ve electro de sheet | Cyclic stress (kgf) |
|---|---|---|---|---|---|---|---|---|---|---|
| C6 (Com parati ve examp le) | EC/EM C=3/7 | / | / | / | / | | LiPF ₆ | 12. 5 | 14.2% | 267 |
| E12 | EC/EM C=3/7 | Ti(OSi(CH₃ )₃)₄ | 0.82 8 | LiSO₃ F | 2.17 2 | 1:10 | LiPF ₆ | 12. 5 | 10.20 % | 247 |

It is noted that the present application is not limited to the foregoing embodiments. The above embodiments are merely examples, and embodiments having substantially the same configuration as the technical idea and exerting the same effects within the scopes of the technical solutions of the present application are all included in the technical scope of the present application. In addition, without departing from the theme of the present application, application of various modifications that may be conceived by those skilled in the art to the embodiments and other modes constructed by combining some of the constituent elements of the embodiments are also included in the scope of the present application.

## Claims

1. An electrolyte, the electrolyte comprising:
a fluorinated metal salt with S=O or P=O; and
a titanate with a structural formula Ti-(O-R₁)₄, wherein the R₁ is selected from one or more of C₁-C₆ alkyl, C₁-C₆ halogenated alkyl, C₂-C₆ alkenyl, C₂-C₆ alkynyl or C₁-C₆ silyl.

2. The electrolyte according to claim 1, wherein the fluorinated metal salt is selected from one or more of MSO₃F and MPO₂F₂; and M is a metal ion, optionally, it may be one of Li, Na, K or Cs.

3. The electrolyte according to claim 1 or 2, wherein the fluorinated metal salt is selected from one or more of LiSO₃F and LiPO₂F₂.

4. The electrolyte according to any one of claims 1-3, wherein the titanate is selected from one or more of the following: Ti-[O-Si(CH₃)₃]_{₄} , Ti-[O-CH₂CH₂CH₃]_{₄} , Ti-O-CH₂CH₃]_{₄} , Ti-[O-CH₂CH₂CF₃]_{₄} and Ti-[O-CH₂CH=CH₂]_{₄}.

5. The electrolyte according to any one of claims 1-4, wherein a molar ratio of the titanate to the fluorinated metal salt is 2/1-1/20, and is optionally 1/8-1/10.

6. The electrolyte according to any one of claims 1-5, wherein the fluorinated metal salt accounts for 0.01%~8% of an electrolyte quality, optionally may be 0.1%∼5%, and further optionally may be 0.2%~3%; and the titanate accounts for 0.01%~8% of the electrolyte quality, optionally may be 0.1%~5%, and further optionally may be 0.15%~2.5%.

7. The electrolyte according to any one of claims 1-6, wherein a sum of the fluorinated metal salt and the titanate accounts for 0.01~10% of the electrolyte quality, optionally may be 0.1%~8%, and further optionally may be 0.2%~4%.

8. The electrolyte according to any one of claims 1-7, wherein the electrolyte further comprises a fluorinated solvent, and the fluorinated solvent is selected from one or more of fluorocarbonate, fluorobenzene and fluoroether; optionally, the fluorocarbonate is selected from at least one of 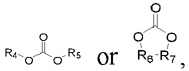 and/or, the fluorobenzene is 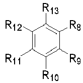 and/or, the fluoroether is 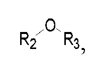 , wherein R₂, R₃, R₄ and R₅ are each independently selected from C₁-C₆ alkyl and C₁-C₆ fluoroalkyl, R₆ and R₇ are each independently selected from C₁-C₄ alkylene and C₁-C₄ fluoroalkylene, and R₈, R₉, R₁₀, R₁₁, R₁₂ and R₁₃ are each independently selected from F or H.

9. The electrolyte according to any one of claims 1-8, wherein the fluorocarbonate is selected from at least one of 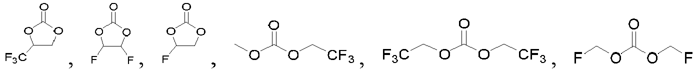 and 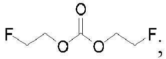 and/or, the fluorobenzene is 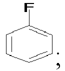 and/or, the fluoroether is selected from at least one of

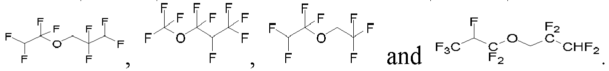

10. The electrolyte according to claim 8, wherein the fluorinated solvent accounts for 10-70% of the electrolyte quality.

11. A secondary battery, comprising:
the electrolyte according to any one of claims 1-10.

12. The secondary battery according to claim 11, wherein
the secondary battery comprises a positive electrode sheet and a negative electrode sheet, the positive electrode sheet comprises a positive electrode current collector and a positive electrode film layer provided on at least one surface of the positive electrode current collector, and the positive electrode film layer contains a vinylidene fluoride-alkyl unit-acrylate-acrylic acid copolymer (PVdF-Ac) as a binder.

13. The secondary battery according to claim 12, wherein
the binder has a structure of a general formula (I): 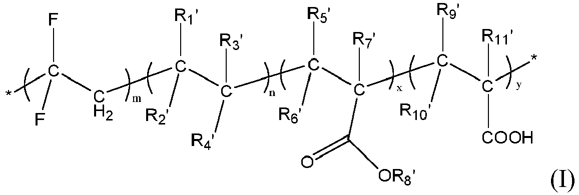
wherein m=60~75%,
n=5%~10%,
x=10%~25%,
y=3~5%,
R₁', R₂', R₃' and R₄' are each independently selected from hydrogen, optionally substituted C₁-C₈ alkyl, wherein a substituent is selected from at least one of F, Cl and Br.
R₅', R₆' and R₇'are each independently selected from hydrogen, optionally substituted C₁-C₆ alkyl, wherein the substituent is selected from at least one of F, Cl and Br,
R₈' is selected from optionally substituted C₁-C₁₅ alkyl, wherein the substituent is selected from at least one of F, Cl and Br, and
R₉', R₁₀' and R₁₁' are each independently selected from hydrogen, optionally substituted C₁-C₆ alkyl, wherein the substituent is selected from at least one of F, Cl and Br.

14. The secondary battery according to claim 12, wherein
the positive electrode film layer contains at least one positive electrode active material selected from the following: lithium manganese iron phosphate, lithium cobalt oxide, lithium nickel oxide, lithium manganese oxide, lithium nickel cobalt manganese oxide, lithium nickel cobalt aluminum oxide and a complex of the above compounds with other transition metal or non-transition metal.

15. The secondary battery according to claim 12, wherein
the negative electrode sheet comprises a negative electrode current collector and a negative electrode film layer provided on at least one surface of the negative electrode current collector, and the negative electrode film layer contains a compound with an epoxy group or an isocyanate group; when the negative electrode film layer contains a compound with the epoxy group, the compound with the epoxy group contains at least two epoxy groups, and when the negative electrode film layer contains a compound with the isocyanate group, the compound with the isocyanate group contains at least two isocyanate groups.

16. The secondary battery according to claim 15, wherein
the compound with the epoxy group is selected from one or more of bisphenol A diglycidyl ether, bisphenol F diglycidyl ether, bisphenol S diglycidyl ether, pentaerythritol glycidyl ether, 1, 4-butanediol glycidyl ether, propylene glycol glycidyl ether, glycidyl phthalate, diglycidyl tetrahydrophthalate, diglycidyl hexahydrophthalate, 4, 4'-diaminodiphenylmethane tetraglycidyl epoxy, triglycidyl-p-aminophenol, 1, 3-bis (N, N-diglycidylaminomethyl) cyclohexane, tetraglycidyl-1, 3-bis (aminomethylcyclohexane), 9, 9-bis [(2, 3-glycidoxy) phenyl] fluorene, 1, 4-cyclohexanedimethanol diglycidyl ether, tetraglycidyl-4, 4'-diaminodiphenyl ether and tetraglycidyl-3, 4'-diaminodiphenyl ether;
and the compound with the isocyanate group is selected from one or more of toluene diisocyanate, diphenylmethane diisocyanate, 1, 5-naphthalene diisocyanate, dimethyl biphenyl diisocyanate, hexamethylene diisocyanate, 2, 2, 4-trimethylhexamethylene diisocyanate, 2, 4, 4-trimethylhexamethylene diisocyanate, xylylene diisocyanate, tetramethyl xylylene diisocyanate, hydrogenated xylylene diisocyanate, isophor of erone diisocyanate, 4, 4'-dicyclohexylmethane diisocyanate, 1, 4-cyclohexane diisocyanate, methylcyclohexane diisocyanate, 1, 4-phenylene diisocyanate and norbornane diisocyanate.

17. A battery module, comprising the secondary battery according to any one of claims 11-16.

18. A battery pack, comprising the secondary battery according to any one of claims 11-16 or the battery module according to claim 17.

19. A power consumption apparatus, comprising at least one of the secondary battery selected from any one of claims 11-16, the battery module according to claim 17 or the battery pack according to claim 18.
